# EUROPEAN PATENT APPLICATION

(11) **EP 4 132 062 A1**
(43) Date of publication of application: **08.02.2023**
(21) Application number: 21782168.5
(22) Date of filing: 02.04.2021
(51) Int. Cl.: H04W 24/02, H04W 52/02

(54) **REFERENCE SIGNAL DETERMINATION METHOD AND APPARATUS, ELECTRONIC DEVICE, AND STORAGE MEDIUM**

(30) Priority: 03.04.2020 CN 202010264933
(71) Applicant: Spreadtrum Communications (Shanghai) Co., Ltd., Shanghai 201203 (CN)
(72) Inventor: ZHOU, Huayu, Shanghai 201203 (CN); ZHAO, Sicong, Shanghai 201203 (CN); PAN, Zhengang, Shanghai 201203 (CN)
(74) Representative: Boult Wade Tennant LLP
(86) International application number: PCT/CN2021/085260
(87) International publication number: WO 2021/197470

(57) **Abstract**

Embodiments of the present application provide a method and an apparatus for determining a reference signal, an electronic device and a storage medium. The method includes: detecting a downlink signal or monitoring a physical downlink control channel (PDCCH) to obtain a first result, where the first result is a detection result or a monitoring result; and determining whether the reference signal is valid according to the first result. Since it is determined whether the reference signal is valid based on detecting the downlink signal or monitoring a structure of the PDCCH, the system overhead is optimized. In addition, the UE only needs to wake up before a last synchronization signal block or a synchronization signal block burst before a PO, and implements AGC adjustment and channel tracking (or AGC adjustment, channel tracking and measurement) using the last synchronization signal block (or a synchronization signal block burst) and the reference signal, or, the UE performs the AGC adjustment, the channel tracking and measurement only using the reference signal, which effectively reduces the time for the UE to wake up in advance and saves the UE energy.

## Description

This application claims priority to Chinese Application No. 202010264933.7, filed to the China National Intellectual Property Administration on April 3, 2020 and entitled "Method and Apparatus for Determining Reference Signal, Electronic Device and Storage Medium", the entire contents of which are incorporated herein by reference.

### TECHNICAL FIELD

The present application relates to the field of communication technology, and in particular, to a method and an apparatus for determining a reference signal, an electronic device and a storage medium.

### BACKGROUND

When a user equipment (User Equipment, UE) is in an idle state (Idle mode or RRC IDLE), the UE needs to monitor a paging (Paging) physicaldownlink control channel (Physical Downlink Control Channel, PDCCH) to determine whether there is a paging message (paging message) needs to be received. The paging message is carried by a physical downlink shared channel (Physical Downlink Shared Channel, PDSCH), and the PDSCH is scheduled by the paging PDCCH. Currently, the UE relies on synchronization signal blocks or synchronization signal block bursts to perform automatic gain control (Automatic Gain Control, AGC) adjustment, channel tracking and the like. The synchronization signal blocks or the synchronization signal block bursts are periodically sent by a network device. Therefore, the UE needs to wake up at least before the last synchronization signal block or synchronization signal block burst before a paging occasion (paging occasion, PO), and use the last synchronization signal block or synchronization signal block burst to perform the AGC adjustment, the channel tracking and measurement, where the channel tracking includes time-frequency tracking and/or time-frequency synchronization, and the measurement can be radio resource management (Radio Resource Management, RRM) measurement or radio link monitoring (Radio Link Monitoring, RLM)measurement.

In the prior art, when the UE experiences a long sleep, for example, an interval between the two POs that the UE needs to monitor is relatively large due to PO configuration, the UE may need to wake up before the last two synchronization signal blocks before the PO, and the UE uses two synchronization signal blocks or two synchronization signal block bursts to perform the AGC adjustment and the channel tracking, respectively, or, the UE uses the two synchronization signal blocks or the two synchronization signal block bursts to perform the AGC adjustment, channel tracking and measurement, respectively.

However, in the prior art, the UE may need to wake up before the last two synchronization signal blocks before the PO, which will cause the UE to wake up early for a long time and consume more power. In this case, an additional reference signal can be added to reduce the time for the UE to wake up in advance. However, introducing the additional reference signal may increase sy stem overhead. Therefore, the UE needs to determine when the reference signal is valid (valid, available). How to determine an effective reference signal is an urgent problem to be solved.

### SUMMARY OF THE INVENTION

The present application provides a method and an apparatus for determining a reference signal, an electronic device and a storage medium to determine whether the reference signal is valid, thereby realizing the optimization of both UE energy saving and system overhead.

In a first aspect, an embodiment of the present application provides a method for determining a reference signal, including:
detecting a downlink signal or monitoring a PDCCH to obtain a first result, where the first result is a detection result or a monitoring result; and determining whether the reference signal is valid according to the first result.

In the embodiments of the present application, it is determined whether the reference signal is valid based on detecting the downlink signal or monitoring a structure of the PDCCH, the system overhead is optimized. In addition, the UE only needs to wake up before a last synchronization signal block or a synchronization signal block burst before a PO, and implements AGC adjustment and channel tracking (or AGC adjustment, channel tracking and measurement) using the last synchronization signal block (or a synchronization signal block burst) and the reference signal, or, the UE performs the AGC adjustment, the channel tracking and measurement only using the reference signal, which effectively reduces the time for the UE to wake up in advance and saves the UE energy.

In a possible implementation, the PDCCH includes a paging PDCCH, and the determining whether the reference signal is valid according to the first result includes:
if the paging PDCCH is monitored, determining that the reference signal is valid, where the reference signal is after the paging PDCCH.

In the embodiments of the present application, it is determined that whether the reference signal is valid by detecting the paging PDCCH. Thus, it avoids introducing a new channel, and the system overhead can be optimized.

In a possible implementation, the determining that the reference signal is valid, where the reference signal is after the paging PDCCH, includes:
determining that the reference signal in a first preset time is valid, where the first preset time is after the paging PDCCH.

In a possible implementation, the PDCCH includes a paging PDCCH, the determining whether the reference signal is valid according to the first result includes:
if the paging PDCCH is monitored, obtaining a paging message scheduled by the paging PDCCH; and if the paging message includes an identifier of a target UE, determining that the reference signal is valid.

In the embodiments of the present application, by determining whether the reference signal is valid according to the paging message scheduled by the paging PDCCH, it is no need to introduce a new channel, and the reference signal is determined to be valid only when the paging message includes the identifier of the target UE. As a result, the number of times that the UE measures the reference signal is reduced, and energy consumption is saved.

In a possible implementation, the determining that the reference signal is valid includes:
determining that the reference signal in a second preset time is valid, where the second preset time is after obtaining the paging message.

In a possible implementation, the PDCCH includes a paging PDCCH, and the determining whether the reference signal is valid according to the first result includes:
if the paging PDCCH is monitored, obtaining first paging indication information in the paging PDCCH; and determining whether the reference signal is valid according to the first paging indication information.

In a possible implementation, the determining whether the reference signal is valid according to the first paging indication information includes:
if the first paging indication information indicates that a UE subgroup needs to receive a paging message or to be woken up, determining that the reference signal is valid, where the reference signal is after obtaining the first paging indication information.

In the embodiments of the present application, it is determined that whether the reference signal is valid by paging the paging indication information in the PDCCH to avoid introducing a new channel, and by further grouping the UEs, the number of times that the UE measures the reference signal is reduced, and the energy consumption is saved.

In a possible implementation, the determining that the reference signal is valid, where the reference signal is after obtaining the first paging indication information, includes:
determining that the reference signal in a third preset time is valid, where the third preset time is after obtaining the first paging indication information.

Optionally, the first paging indication information is carried in a reserved bit in the paging PDCCH.

In a possible implementation, the PDCCH includes a paging indication PDCCH or a PDCCH carrying a paging indication, and the determining whether the reference signal is valid according to the first result includes:
if the paging indication PDCCH or the PDCCH carrying the paging indication is monitored, determining that the reference signal is valid, where the reference signal is after the paging indication PDCCH or is after the PDCCH carrying the paging indication.

In a possible implementation, the determining that the reference signal is valid, where the reference signal is after the paging indication PDCCH or the PDCCH carrying the paging indication includes:
determining that the reference signal in a fourth preset time is valid, where the fourth preset time is after the paging indication PDCCH, or, determining that the reference signal in a fourth preset time is valid, where the fourth preset time is after the PDCCH carrying the paging indication.

In a possible implementation, the method for determining a reference signal provided by the embodiments of the present application further includes:
obtaining second paging indication information in the paging indication PDCCH or obtaining the second paging indication information in the PDCCH carrying the paging indication; and determining whether the reference signal is valid according to the secondpaging indication information.

In a possible implementation, the determining whether the reference signal is valid according to the second paging indication information includes:
if the second paging indication information is used for indicating that a UE subgroup needs to monitor the paging PDCCH or used for indicating that the UE subgroup needs to be woken up, determining that the reference signal is valid, where a target UE belongs to the UE subgroup and the reference signal is after obtaining the paging indication information.

In the embodiments of the present application, it is determined that whether the reference signal is valid by the paging indication information in the paging indication PDCCH, which avoids introducing a new channel, and by further grouping the UEs, the number of times that the UE measures the reference signal is reduced, and energy consumption is saved.

In a possible implementation, the determining that the reference signal is valid, where the reference signal is after obtaining the second paging indication information, includes:
determining that the reference signal in a fifth preset time is valid, where the fifth preset time is after obtaining the second paging indication information.

In a possible implementation, the downlink signal includes a tracking reference signal (TRS), and the determining whether the reference signal is valid according to the first result includes:
if the TRS is detected, determining that the reference signal is valid, where the reference signal is following the TRS.

In the embodiments of the present application, by detecting the TRS and determining that the reference signal is valid, where the reference signal is after the TRS, not only the determination of whether the reference signal is valid is realized, but also the TRS can be used for time-frequency synchronization without introducing additional signaling thereby saving the system overhead.

In a possible implementation, the determining that the reference signal is valid, where the reference signal is following the TRS includes:
determining that the reference signal in a sixth preset time following the TRS is valid.

In a possible implementation, a quasi co-location (QCL) relationship exists between the TRS and a synchronization signal block, and a QCL relationship, an association relationship, or reference relationship exists between the synchronization signal block and the reference signal.

In a possible implementation, the reference signal is a channel state information reference signal (Channel State Information-Reference Signal, CSI-RS). The apparatus, the electronic device, the computer-readable storage medium, and computer program product provided by the embodiments of the present application are described below. For the content and effects, reference may be made to the method for determining a reference signal provided by the embodiments of the present application, and the details are not repeated here.

In a second aspect, an embodiment of the present application provides an apparatus for determining a reference signal, including:
a detecting module, configured to detect a downlink signal or monitor a physical downlink control channel (PDCCH) to obtain a first result, where the first result is a detection result or a monitoring result; and
a determining module, configured to determine whether the reference signal is valid according to the first result.

In a possible implementation, the PDCCH includes a paging PDCCH, the determining module is configured to:
if the paging PDCCH is monitored, determine that the reference signal is valid, where the reference signal is after the paging PDCCH.

Optionally, the determining module is specifically configured to:
determine that the reference signal in a first preset time is valid, where the first preset time is after the paging PDCCH.

In a possible implementation, the PDCCH includes a paging PDCCH, and the determining module is configured to:
if the paging PDCCH is monitored, obtain a paging message scheduled by the paging PDCCH; and
if the paging message includes an identifier of a target UE, determine that the reference signal is valid.

In a possible implementation, the determining module is specifically configured to:
determine that the reference signal in a second preset time is valid, where the second preset time is after obtaining the paging message.

In a possible implementation, the PDCCH includes a paging PDCCH, and the determining module is configured to:
if the paging PDCCH is monitored, obtain first paging indication information in the paging PDCCH; and
determine whether the reference signal is valid according to the first paging indication information.

In a possible implementation, the determining module is specifically configured to:
if the first paging indication information indicates that a UE subgroup needs to receive a paging message or to be woken up, determine that the reference signal is valid, where a target UE belongs to the UE subgroup and the reference signal is after obtaining the first paging indication information.

In a possible implementation, the determining module is configured to:
determine that the reference signal in a third preset time is valid, where the third preset time is after obtaining the first paging indication information.

Optionally, the first paging indication information is carried in a reserved bit in the paging PDCCH.

In a possible implementation, the PDCCH includes a paging indication PDCCH or a PDCCH carrying a paging indication, and the determining module is configured to:
if the paging indication PDCCH or the PDCCH carrying the paging indication is monitored, determine that the reference signal is valid, where the reference signal is after the paging indication PDCCH or is after the PDCCH carrying the paging indication.

In a possible implementation, the determining module is specially configured to:
determine that the reference signal in a fourth preset time is valid, where the fourth preset time is after the paging indication PDCCH, or, determine that the reference signal in a fourth preset time is valid, where the fourth preset time is after the PDCCH carrying the paging indication.

In a possible implementation, the determining module is further configured to:
obtain second paging indication information in the paging indication PDCCH or the second paging indication information in the PDCCH carrying the paging indication; and
determine whether the reference signal is valid according to the second paging indication information.

In a possible implementation, the determining module is configured to:
if the second paging indication information is used for indicating that a UE subgroup needs to monitor the paging PDCCH or used for indicating that the UE subgroup needs to be woken up, determine that the reference signal is valid, where a target UE belongs to the UE subgroup and the reference signal is after obtaining the second paging indication information.

In a possible implementation, the determining module is configured to:
determine that the reference signal in a fifth preset time is valid, where the fifth preset time is after obtaining the second paging indication information.

In a possible implementation, the downlink signal includes a tracking reference signal (TRS), and the determining module is configured to:
if the TRS is detected, determine that the reference signal is valid, where the reference signal is following the TRS.

In a possible implementation, the determining module is configured to:
determine that the reference signal in a sixth preset time following the TRS is valid.

In a possible implementation, a quasi co-location (QCL) relationship exists between the TRS and a synchronization signal block, and a QCL relationship, an association relationship, or reference relationship exists between the synchronization signal block and the reference signal.

In a possible implementation, the reference signal is a CSI-RS.

In a third aspect, an embodiment of the present application provides an electronic device, including:
at least one processor; and
a memory connected with the at least one process or in a communication way; where
the memory stores instructions executable by the at least one processor, the instructions being executed by the at least one processorto enable the at least one processor to perform the method provided by the first aspect or in an implementation of the first aspect.

In a fourth aspect, an embodiment of the present application provides a non-transitory computer readable storage medium storing computer instructions, where the computer instructions are used to cause a computer to perform the method provided by the first aspect or in an implementation of the first aspect.

In a fifth aspect, an embodiment of the present application provides a computer program product, including: executable instructions for implementing the method provided by the first aspect or in an implementation of the first aspect.

In the method and the apparatus for determining a reference signal, the electronic device and the storage medium provided by the present application, a first result is obtained by detecting a downlink signal or monitoring a physical downlink control channel (PDCCH), where the first result is a detection result or a monitoring result; according to the first result, it is determined that whether the reference signal is valid. In the embodiments of the present application, since it is determined whether the reference signal is valid based on detecting the downlink signal or monitoring a structure of the PDCCH, the system overhead is optimized. In addition, the UE only needs to wake up before a last synchronization signal block or a synchronization signal block burst before a PO, and implements AGC adjustment and channel tracking (or AGC adjustment, channel tracking and measurement) using the last synchronization signal block (or a synchronization signal block burst) and the reference signal, or, the UE performs the AGC adjustment, the channel tracking and measurement only using the reference signal, which effectively reduces the time for the UE to wake up in advance and saves the UE energy.

### BRIEF DESCRIPTION OF DRAWINGS

In order to more clearly illustrate the embodiments of the present application or the technical solutions in the prior art, the following will briefly introduce the drawings needed to be used in the description of the embodiments or the prior art. Obviously, the drawings in the following description are some embodiments of the present application, and for those of ordinary skill in the art, other drawings can also be obtained according to these drawings without any creative effort.
FIG. 1 is a schematic diagram of an exemplary application scenario of an embodiment of the present application.
FIG. 2 is a flowchart of a method for determining a reference signal provided by an embodiment of the present application.
FIG. 3 is a flowchart of a method for determining a reference signal provided by another embodiment of the present application.
FIG. 4 is a schematic structural diagram of a reference signal provided by an embodiment of the present application.
FIG. 5 is a flowchart of a method for determining a reference signal provided by another embodiment of the present application.
FIG. 6 is a flowchart of a method for determining a reference signal provided by another embodiment of the present application.
FIG. 7 is a flowchart of a method for determining a reference signal provided by another embodiment of the present application.
FIG. 8 is a schematic structural diagram of a reference signal provided by another embodiment of the present application.
FIG. 9 is a flowchart of a method for determining a reference signal provided by another embodiment of the present application.
FIG. 10 is a schematic structural diagram of an apparatus for determining a reference signal provided by an embodiment of the present application.
FIG. 11 is a schematic structural diagram of an electronic device provided by an embodiment of the present application.

### DESCRIPTION OF EMBODIMENTS

In order to make the purposes, the technical solutions and the advantages of the embodiments of the present application clearer, the technical solutions of the embodiments of the present application will be described clearly and completely below with reference to the drawings of the embodiments of the present application. Obviously, the described embodiments are a part of the embodiments of the present application, rather than all of the embodiments. Based on the embodiments of the present application, all other embodiments obtained by those of ordinary skill in the art without creative efforts shall fall within the protection scope of the present application.

The terms "first", "second", "third", "fourth", etc. (if any) in the description and claims as well as the above-mentioned drawings of the present application are used to distinguish similar objects and are not necessarily used to describe a specific order or sequence. It is to be understood that the data so used are interchangeable under appropriate circumstances, so that the embodiments of the present application described herein, for example, can be implemented in sequences other than those illustrated or described herein. Furthermore, the terms "including" and "comprising" and any variations thereof, are intended to cover non-exclusive inclusion. For example, a process, a method, a system, a product or a device including a series of steps or units is not necessarily limited to those expressly listed steps or units, but also may include other steps or units not expressly listed or inherent to the process, the method, the product or the device.

When the UE is in an idle state, the UE needs to monitor a paging PDCCH used to carry the paging message to determine whether a paging message is sent to itself. Currently, the UE relies on the synchronization signal block to perform AGC adjustment, channel tracking and the like. In the prior art, when the UE experiences a long sleep, for example, the interval between the two POs that the UE needs to monitor due to a PO configuration is relatively large, the UE may need to wake up before the last two synchronization signal blocks or synchronization signal block bursts before a PO and use the two synchronization signal blocks or the two synchronization signal block bursts for AGC adjustment, channel tracking and/or measurements, respectively. Therefore, it will cause a long time for the UE to wake up in advance, which consumes more power. In this case, an additional reference signal can be added to reduce the time for the UE to wake up in advance. However, introducing additional reference signal may increase system overhead. Therefore, it is preferable that the base station only transmits the reference signal at certain times, and accordingly, the UE needs to determine when the reference signal is valid. How to determine a valid reference signal is an urgent problem to be solved. In order to solve the above technical problems, embodiments of the present application provide a method and an apparatus for determining a reference signal, an electronic device, and a storage medium.

The concept of the present application is that it is determined that whether the reference signal is valid based on detecting the downlink signal or monitoring a structure of the PDCCH, and the system overhead is optimized. In addition, the UE only needs to wake up before a last synchronization signal block or a synchronization signal block burst before a PO, and implements AGC adjustment and channel tracking (or AGC adjustment, channel tracking and measurement) using the last synchronization signal block (or a synchronization signal block burst) and the reference signal, or, the UE performs the AGC adjustment, the channel tracking and measurement only using the reference signal, which effectively reduces the time for the UE to wake up in advance and saves the UE energy.

The embodiments of the present application do not limit specific implementation of how to implement AGC adjustment and channel tracking according to the reference signal and the synchronization signal block (or synchronization signal block burst). For example, the UE can use the last synchronization signal block (or synchronization signal block burst) to perform AGC adjustment in order to receive subsequent signals (including reference signals) with a suitable dynamic range to avoid signal saturation or overflow, and then the UE can achieve channel tracking including time-frequency offset estimation and compensation by processing the reference signals to achieve time-frequency synchronization with the base station. For another example, the UE can perform AGC adjustment and channel tracking through the last synchronization signal block (or synchronization signal block burst), so as to receive subsequent signals (including reference signals) with a suitable dynamic range to avoid signal saturation or overflow, and then the UE can achieve channel tracking including time-frequency offset estimation and compensation. Then, the UE can realize the measurement (including RRM measurement and/or RLM measurement) by measuring reference signals; and the UEmay also not use synchronization signal blocks or synchronization signal block bursts and only use the reference signal for AGC adjustment, time-frequency synchronization and measurement. For example, the reference signal includes a tracking reference signal (Tracking Reference Signal, TRS), etc.

As described above, the reference signal may be used for both channel tracking and measurement. The reference signal may be a TRS, a CSI-RS, or a synchronization signal (Synchronization Signal, SS). The reference signal can also be other types of signals. The reference signal may be used for mobility or radio resource management (Radio Resource Management, RRM)/radio link monitoring (Radio Link Monitoring, RLM) measurement, therefore, it may be a CSI-RS for mobility or a CSI-RS for RRM/RLM measurement. The CSI-RS for mobility or the CSI-RS for RRM/RLM measurement may be a NZP CSI-RS resource (Non-zero Power CSI-RS resource, Non-zero Power CSI-RS resource). The reference signal may be used for function of channel tracking and thus may be a TRS. The TRS can be an NZP-CSI-RS-ResourceSet (Non-zero Power CSI-RS resource set, Non-zero Power CSI-RS resource set), and the NZP-CSI-RS-ResourceSet can include four NZP CSI-RS resources within two continuous slots, where two NZP CSI-RS resources exist in each slot. The TRS can be periodic or aperiodic. When the TRS is periodic, the NZP CSI-RS resources within the NZP-CSI-RS-ResourceSet have the same periodicity, bandwidth and subcarrier location. When the TRS is aperiodic, the periodic CSI-RS resources are in one NZP-CSI-RS-ResourceSet, the aperiodic CSI-RS resources are in another NZP-CSI-RS-ResourceSet, the periodic CSI-RS resources and the aperiodic CSI-RS resources have the same bandwidth (same resource block location), and the aperiodic CSI-RS resources and the periodic CSI-RS resources are QCL-Type-A (Quasi Colocation Type-A, Quasi Colocation Type-A) and (QCL-Type-D Quasi Colocation Type-D, Quasi Colocation Type-D).

The synchronization signal block (SS/PBCH Block, SSB) is a signal structure defined in New Radio (New Radio, NR), which includes a primary synchronization signal (Primary Synchronization Signal, PSS), a secondary synchronization signal (Secondary Synchronization Signal, SSS) and Physical Broadcast Channel (Physical Broadcast Channel, PBCH). The main function of the PSS and the SSS is to help the UE identify and synchronize with the cell. The PBCH contains the most basic system information such as system frame number, intra-frame timing information, etc. Each synchronization signal block has a predetermined time domain location, and the time domain location may also be referred to as a candidate synchronization signal block. Multiple synchronization signal blocks form a synchronization burst (SS-burst), or a synchronization signal block burst (SSB burst). Multiple synchronization signal bursts form a synchronization signal burst set (SS-burst-set) or a synchronization signal block burst set (SSB burst set).

In addition, the reference signal is valid and may be equivalent to that the reference signal is existing (existing present, presence), or available (useful), or needs to be measured. The UE determines that the reference signal is valid for a certain period of time, which is also equivalent that the UE determine that the reference signal is invalid outside the certain period of time or the UE does not expect the reference signal to be effective outside the certain period of time, or the UE does not need to measure the reference signal outside the certain period of time.

Hereinafter, exemplary application scenarios of the embodiments of the present application are introduced.

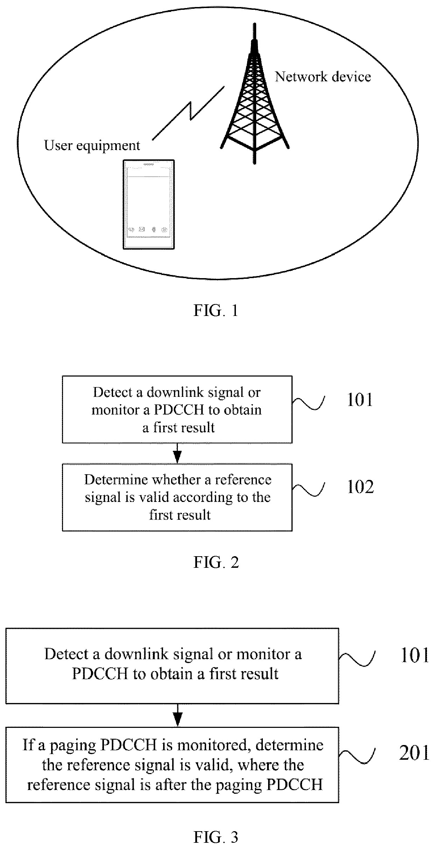

The method for determining a reference signal provided by the embodiment of the present application may be performed by the apparatus for determining a reference signal provided by the embodiment of the present application, and the apparatus for determining a reference signal provided by the embodiment of the present application may be part or all of the terminal equipment. FIG. 1 is a schematic diagram of an exemplary application scenario of an embodiment of the present application. As shown in FIG. 1, the communication system includes: a network device and a user equipment. The network device and the user equipment may communicate using one or more air interface technologies.

Network device: may be a base station, or various wireless access points, or may refer to a device in an access network that communicates with user equipment through one or more sectors on the air interface. The base station can be used to convert received air frames and internet protocol (internet protocol, IP) packets with each other and act as a router between the wireless terminal and the rest of the access network, where the rest of the access network can include the IP network. The base station may also coordinate attribute management of the air interface. For example, the base station may be a base transceiver station (Base Transceiver Station, BTS) in Global System of Mobile communication (Global System of Mobile communication, GSM) or code division multiple access (Code Division Multiple Access, CDMA), or a NodeB (NodeB, NB) in a wideband code division multiple access (Wideband Code Division Multiple Access, WCDMA), or an evolutional Node B (Evolutional Node B, eNB or eNodeB) in long term evolution (Long Term Evolution, LTE), or a relay station or an access point, or a base station (gNB) in the 5G network, etc., which are not limited here.

User equipment: also known as terminal equipment, and the terminal equipment can be a wireless terminal or a wired terminal. The wireless terminal can be a device that provides voice and/or other service data for connectivity to users, a handheld device with wireless connectivity function, or other processing devices connected to a wireless modem. A wireless terminal may communicate with one or more core networks via a radio access network (Radio Access Network, RAN), and the wireless terminal, may be a mobile terminal such as a mobile phone (or known as a "cellular" phone) or a computer with a mobile terminal, may be, for example, a portable, pocket-sized, hand-held, computer-embedded, or vehicle-mounted mobile terminal, and it exchanges language and/or data with the wireless access network. For example, the wireless terminal may be a personal communication service (Personal Communication Service, PCS) phone, a cordless phone, a session initiation protocol (Session Initiation Protocol, SIP) phone, a wireless local loop (Wireless Local Loop, WLL) station, a personal digital assistant (Personal Digital Assistant, PDA) or other devices. A wireless terminal may also be referred to as a system, a subscriber unit (Subscriber Unit), a subscriber station (Subscriber Station), a mobile station (Mobile Station), a mobile station (Mobile), a remote station (Remote Station), a remote terminal (Remote Terminal), an access terminal (Access Terminal), a user terminal (User Terminal), or a user agent (User Agent), which are not limited here.

It should be noted that the above communication system may be a long term evolution (Long Term Evolution, LTE) communication system, ormay be other communication systems in the future, which is not limited herein. The following all takes the 5G communication system as an example for description and introduction.

### Embodiment 1

FIG. 2 is a flowchart of a method for determining a reference signal provided by an embodiment of the present application. The method may be executed by an apparatus for determining a reference signal provided by an embodiment of the present application, and the apparatus may be implemented by software and/or hardware. For example: the apparatus may be part or all of the above-mentioned user equipment. The following describes the method for determining a reference signal by taking the user equipment as an executive entity. As shown in FIG. 2, the method in the embodiments of the present application may include the following.

Step S101: detect a downlink signal or monitor a PDCCH to obtain a first result.

The first result is a detection result or a monitoring result. If the UE detects the downlink signal, the first result is the detection result. If the UE monitors the PDCCH, the first result is the monitoring result. This embodiment of the present application does not limit the type of the downlink signal, for example, the downlink signal may be a TRS, a paging message, a paging indication message, etc. The embodiment of the present application does not limit the type of the PDCCH, for example, the PDCCH may be a paging PDCCH, a paging indication PDCCH, a PDCCH carrying the paging indication, etc. The followings are only taken as examples in the embodiments of the present application, and are not limited thereto. It is worth noted that both detecting and monitoring are UE blind detection processes, that is, the UE cannot determine whether the base station has sent the downlink signal or the PDCCH, but confirms whether the base station has sent the downlink signal or the PDCCH through blind detection. If the UE detects the downlink signal, the detection result is whether the downlink signal is detected. If the UE monitors the PDCCH, the monitoring result is whether the PDCCH decoding is successful, or whether the cyclic check code (Cyclic Check Code, CRC) descrambling of the PDCCH is correct. Herein, the UE detects the downlink signal, which is equivalent to that the UE detects the downlink signal and the detection result is that the downlink signal is detected, or is equivalent to that the UE successfully detects the downlink signal. Herein, the UE monitors the PDCCH, which is equivalent to that the UE monitors the PDCCH and the monitoring result is that the PDCCH is decoded successfully, or is equivalent to that the UE successfully monitors the PDCCH.

Step S102: determine whether a reference signal is valid according to the first result.

In a possible implementation, the reference signal is the CSI-RS. The reference signal may be configured according to a periodic signal, which is not valid in every period, but only in certain periods. For example, for CSI-RS based mobility measurements, if the UE is configured with discontinuous reception (Discontinuous Reception, DRX) and uses a DRX cycle greater than 80 ms, the UE does not expect that CSI-RS resources are available outside of the active time (Active Time). This can reduce system overhead and UE power consumption. Therefore, it is necessary to determine whether the reference signal is valid.

This embodiment of the present application does not limit specific implementations of determining whether the reference signal is valid according to the first result. For example, whether the reference signal is valid may be determined according to the detection result of the downlink signal or the monitoring result of the PDCCH. When the specific information of the downlink signal or the PDCCH is different, the implementation of determining whether the reference signal is valid may also be different. Exemplarily, if the PDCCH is a paging PDCCH, it may be determined whether the reference signal is valid according to the monitoring result of the paging PDCCH, and the embodiment of the present application is not limited thereto.

This embodiment of the present application implements the determination of whether the reference signal is valid through the configuration information, thereby optimizing the sy stem overhead. In addition, the UE only needs to wake up before the last synchronization signal block before a PO, so that the UE can realize AGC adjustment and channel tracking (or AGC adjustment, and channel tracking and measurement) through the reference signal and the last synchronization signal block (or the synchronization signal block burst), which effectively reduces the time for the UE to wake up in advance, thereby realizing the optimization of both UE energy saving and system overhead.

### Embodiment 2

In a possible implementation, the PDCCH includes a paging PDCCH. FIG. 3 is a flowchart of a method for determining a reference signal provided by another embodiment of the present application. The method may be performed by the apparatus for determining a reference signal provided in the embodiment of the present application, where the apparatus may be implemented in software and/or hardware. For example, the apparatus may be part or all of the above-mentioned user equipment. The following describes the method for determining a reference signal with the user equipment as the executive entity. As shown in FIG. 3, the step S102 in the embodiments of the present application may include the following.

Step S201: if a paging PDCCH is monitored, determine that the reference signal is valid, where the reference signal is after the paging PDCCH.

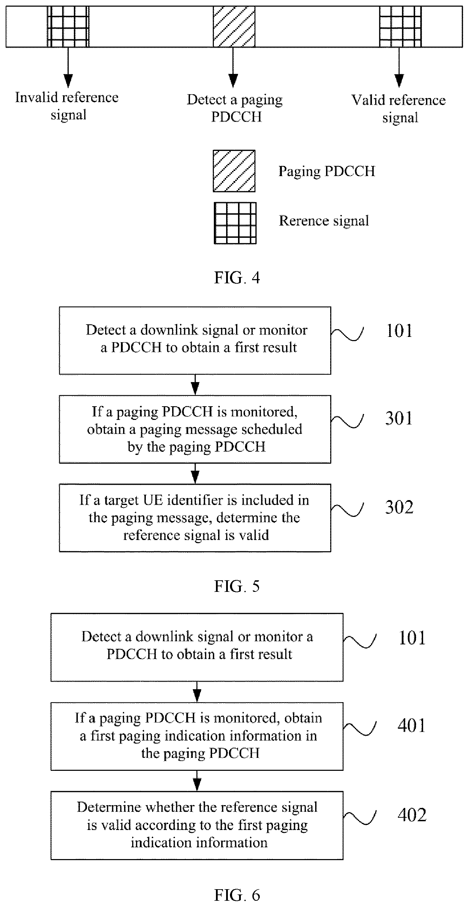

The reference signal may be configured according to a periodic signal, which is not valid in every period, but only in certain periods. FIG. 4 is a schematic structural diagram of a reference signal provided by an embodiment of the present application. As shown in FIG. 4, the reference signal is sent periodically, and the UE monitors the paging PDCCH. If the UE does not monitor the paging PDCCH, the reference signal is determined to be invalid, i.e., the invalid reference signal in FIG. 4. If the UE monitors the paging PDCCH (decoding of the paging PDCCH is successful or the CRC descrambling of the paging PDCCH is correct), it is determined that the reference signal, which is after monitoring the paging PDCCH, is valid, i.e., the valid reference signal in FIG. 4. The CRC of the paging PDCCH may be scrambled by the Paging Radio Network Temporary identifier (Paging Radio Network Temporary ID, P-RNTI). When monitoring the paging PDCCH, the UE needs to use the P-RNTI to descramble the CRC of the paging PDCCH.

In a possible implementation, determining that the reference signal is valid, where the reference signal is after the paging PDCCH, includes: determining that the reference signal in a first preset time is valid, where the first preset time is after the paging PDCCH.

This embodiment of the present application does not limit the specific time length of the first preset time, and the first preset time may be a presetvalue, for example, 1 millisecond, 2 milliseconds, 1 time slot, 2 time slots, and so on. This embodiment of the present application does not limit the specific implementation manner of obtaining the first preset time. For example, the first preset time configuration may be obtained through higher layer parameter configuration. By defining a valid time range of the reference signal, it is possible for the base station to transmit the reference signal only within the valid time range, thus the overhead of the system or the network is reduced.

In a possible implementation, determining that the reference signal is valid, where the reference signal is after the paging PDCCH, includes determining that the reference signal in a first preset time window is valid, where the first preset time window is after the paging PDCCH. Where, the first preset time window may include a start point and a duration (or an end point). This embodiment of the present application does not limit the specific implementation of obtaining the first preset time window. For example, the configuration of the first preset time window may be obtained through higher layer parameter configuration. The use of time windows can increase flexibility.

In a possible implementation, determining that the reference signal is valid, where the reference signal is after the paging PDCCH, includes determining the first type of timer is started after paging the PDCCH, and the reference signal is valid before the first type of timer expires. The first type of timer may include a start point and a duration. This embodiment of the present application does not limit the specific implementation of obtaining the first type of timer. For example, the first type of timer configuration may be obtained through higher layer parameter configuration. Use of a timer can simplify complexity.

In the embodiment of the present application, it is determined that whether the reference signal is valid by detecting the paging PDCCH. It is without introducing a new channel, and the system overhead can be optimized.

### Embodiment 3

In another possible implementation, the PDCCH includes a paging PDCCH, and a paging message is scheduled in the paging PDCCH. FIG. 5 is a flowchart of a method for determining a reference signal provided by another embodiment of the present application. The method may be performed by an apparatus for determining a reference signal provided by an embodiment of the present application, and the apparatus may be implemented in software and/or hardware. For example, the apparatus may be part or all of the above mentioned user equipment. The following describes the method for determining a reference signal by taking the user equipment as the executive entity. As shown in FIG. 5, step S102 in the embodiments of the present application may include the followings.

Step S301: if a paging PDCCH is monitored, obtain a paging message scheduled by the paging PDCCH.

The p aging message is the information carried by a PDSCH scheduled by the paging PDCCH, and the paging message includes an identifier of the UE or an identifier of the UE subgroup that the base station is paging where the UE subgroup includes at least one UE. The UE first monitors the paging PDCCH, and if the paging PDCCH is monitored (decoding of the paging PDCCHis successful or the CRC descrambling of the paging PDCCHis correct), it will receive the PDSCH according to the scheduling information in the paging PDCCH, where the PDSCH carries the paging message (paging message).

Step S302: if a target UEidentifier is included in the paging message, determine that the reference signal is valid.

Since the paging message may include the identifiers of different UEs, for the sake of clarity, only the identifier of the target UE is used in the embodiment of the present application to represent the identifier of the UE that performs the method for determining a reference signal provided in the embodiment of the present application, and the embodiment of the present application is not limited thereto.

If the paging message includes the identifier of the target UE, it can be determined that the UE is paged, and the UE needs to be woken up to enter the random access procedure. By determining that the reference signal is valid only when the paging message includes the identifier of the target UE, the number of times the UE measures the reference signal can be reduced and energy consumption can be saved.

In a possible implementation, determining that the reference signal is valid includes determining that the reference signal in a second preset time is valid, where the second preset time is after obtaining the paging message.

This embodiment of the present application does not limit the specific time length of the second preset time, and the second preset time may be a preset value, for example, 1 millisecond, 2 milliseconds, 1 time slot, 2 time slots, and so on. This embodiment of the present application does not limit the specific implementation of obtaining the second preset time. For example, the second preset time configuration may be obtained through higher layer parameter configuration. By defining a valid time range of the reference signal, it is possible for the base station to transmit the reference signal only within the valid time range, thus the overhead of the system or the network is reduced.

In a possible implementation, determining that the reference signal is valid, where the reference signal is after obtaining the paging message includes determining that the reference signal in a second preset time window is valid, where the reference signal is after obtaining the paging message. The second preset time window may include a start point and a duration (or an end point). This embodiment of the present application does not limit the specific implementation of obtaining the second preset time window. For example, the configuration of the second preset time window may be obtained through higher layer parameter configuration. The use of time windows can increase flexibility.

In a possible implementation, determining that the reference signal is valid, where the reference signal is after obtaining the paging message, includes: determining that the second type of timer is started after obtaining the paging message, and the reference signal is valid before the second type of timer expires. Among them, the second type of timer may include a starting point and a duration. The embodiment of the present application does not limit the specific implementation of obtaining the second type of timer, for example, the second type of timer configuration may be obtained through higher layer parameter configuration. Use of a timer can simplify complexity.

In the embodiment of the present application, by determining whether the reference signal is valid according to the paging message scheduled by the paging PDCCH, it is not necessary to introduce a new channel. The reference signal is determined to be valid only when the paging message includes the identifier of the target UE. This can reduce the number of times that the UE measures the reference signal and save energy.

### Embodiment 4

In a possible implementation, the PDCCH includes a paging PDCCH, and the paging PDCCH includes first paging indication information, where the first paging indication information is used to indicate a UE subgroup that needs to receive a paging message or a UE subgroup that needs to be woken up. Alternatively, the PDCCH includes a paging PDCCH, and the downlink control information (Downlink Control Information, DCI) of the paging PDCCH includes first paging indication information, and the first paging indication information is used to indicate that a UE subgroup that needs to receive a paging message or a UE subgroup that needs to be woken up. FIG. 6 is a flowchart of a method for determining a reference signal provided by another embodiment of the present application. The method may be executed by the apparatus for determining a reference signal provided by the embodiment of the present application, and the apparatus may be implemented in software and/or hardware. For example, the apparatus may be part or all of the above mentioned user equipment. The following describes the method for determining a reference signal by taking the user equipment as the executive entity. As shown in FIG. 6, step S102 in the embodiments of the present application may include following.

Step S401: if a paging PDCCH is monitored, obtain the first paging indication information in the paging PDCCH.

The paging PDCCH includes first paging indication information, and the first paging information can be used to indicate a UE subgroup that needs to be woken up or a UE subgroup that needs to receive a paging message. For example, the first paging information can include the identifier of the UE subgroup that needs to be woken up or the identifier of the UE subgroup that needs to receive a paging message.

This embodiment of the present application does not limit the manner in which the first paging indication information is carried in the paging PDCCH. In a possible implementation, the first paging indication information is carried in reserved bits (reserved bits, or spare bits) in the paging PDCCH, such as 6 bits. The embodiment of the present application is only taken as an example, and is not limited thereto.

Step S402: determine whether the reference signal is valid according to the first paging indication information.

This embodiment of the present application does not limit the manner of determining whether the reference signal is valid according to the first paging indication information. In a possible implementation, determining whether the reference signal is valid according to the first paging indication information includes:
if the first paging indication information indicates that the UE subgroup to which the target UE belongs needs to receive a paging message or the UE subgroup to which the target UE belongs needs to be woken up, determining that the reference signal is valid, where the reference signal is after obtaining the first paging indication information.

In another possible implementation, determining whether the reference signal is valid according to the first paging indication information includes: if the first paging indication information indicates that the UE subgroup to which the target UE belongs does not need to receive a paging message, or indicates that the UE subgroup to which the target UE belongs does not need to be woken up, the reference signal is determined to be invalid. In another possible implementation, determining whether the reference signal is valid according to the first paging indication information includes: if the first paging indication information does not indicate that the UE subgroup to which the target UE belongs needs to receive a p aging message, or does not indicate that the UE subgroup to which the target UE belongs needs to be woken up, it is determined that the reference signal is invalid.

In the embodiment of the present application, it is determined that whether the reference signal is valid by paging the paging indication information in the PDCCH, so as to avoid introducing a new channel, and by further grouping the UE, the number of times the UE measures the reference signal is reduced, and energy consumption is saved.

In a possible implementation, determining that the reference signal is valid, where the reference signal is after obtaining the first paging indication information, includes:
determining that the reference signal in a third preset time is valid, where the third preset time is after obtaining the first paging indication information.

This embodiment of the present application does not limit the specific time length of the third preset time, and the third preset time may be a preset value, for example, 1 millisecond, 2 milliseconds, 1 time slot, 2 time slots, and so on. This embodiment of the present application does not limit the specific implementation manner of obtaining the third preset time. For example, the configuration of the third preset time may be obtained through higher layer parameter configuration. By defining a valid time range of the reference signal, it is possible for the base station to transmit the reference signal only within the valid time range, thus the overhead of the system or the network is reduced.

In a possible implementation, determining that the reference signal, which is after obtaining the first paging indication information, is valid includes
determining that the reference signal in a third preset time window after obtaining the first paging indication information is valid.

The third preset time window may include a start point and a duration (or an end point). This embodiment of the present application does not limit the specific implementation of obtaining the third preset time window. For example, the configuration of the third preset time window may be obtained through higher layer parameter configuration. The use of a time window can increase flexibility.

In a possible implementation, determining that the reference signal is valid, where the reference signal is after obtaining the first paging indication information, includes:
determining that the third type of timer is started after obtaining the first paging indication information, and the reference signal is valid before the third type of timer expires.

The third type of timer may include a starting point and a duration. Theembodiment of the present application does not limit the specific implementation of obtaining the third type of timer. For example, the configuration of the third type of timer may be obtained through higher layer parameter configuration. Using a timer can simplify complexity.

In the embodiment of the present application, it is determined that whether the reference signal is valid by paging the paging indication information in the PDCCH, so as to avoid introducing a new channel, and by further grouping the UE, the number of times the UE measures the reference signal is reduced, and energy consumption is saved.

The methods in Embodiment 4 and in other embodiments of the present application may be used alone or in combination, which are not limited in the embodiments of the present application.

### Embodiment 5

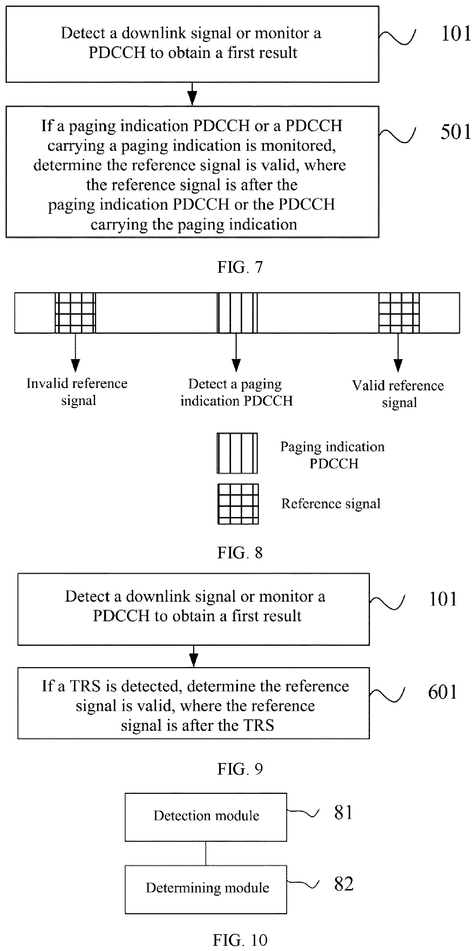

In a possible implementation, the PDCCH includes a paging indication PDCCH or a PDCCH carrying a paging indication, and the reference signal may be before or after the monitoring occasion of the paging indication PDCCH, therefore, the reference signal can be triggered by the paging indication PDCCH. The CRC of the paging indication PDCCH or of the PDCCH carrying the paging indication may not be scrambled by the P-RNTI, so as to distinguish the paging PDCCH from the paging indication PDCCH or the PDCCH carry ing the paging indication. FIG. 7 is a flowchart of a method for determining a reference signal provided by another embodiment of the present application. The method may be performed by an apparatus for determining a reference signal, and the apparatus may be implemented in software and/or hardware. For example, the apparatus may be part or all of the above mentioned user equipment, and the method for determining a reference signal is described below with the user equipment as the executive entity. As shown in FIG. 7, step S102 in the embodiments of the present application may include the following.

Step S501: if a paging indication PDCCH or the PDCCH carrying the paging indication is monitored, determine that the reference signal is valid, where the reference signal is after the paging indication PDCCH or the PDCCH carrying the paging indication.

The PDCCH carrying the paging indication may be another PDCCH other than the paging indication PDCCH, which is not limited in the embodiment of the present application and as long as it is a PDCCH that can carry the paging indication. The configuration of the reference signal may be configured according to a periodic signal, which is not valid in every period, but only in certain periods. For ease of understanding, FIG. 8 is a schematic structural diagram of a reference signal provided by another embodiment of the present application. As shown in FIG. 8, the reference signal is sent periodically, and the UE monitors the paging indication PDCCH. If the UE does not monitor the paging indication PDCCH, it is determined that the reference signal is invalid, that is, the invalid reference signal in FIG. 8; and if the UE monitors the paging indication PDCCH, it is determined that the reference signal is valid, where the reference signal is after monitoring the paging indication PDCCH, that is, the valid reference signal in FIG. 8.

Thepaging indication PDCCH or the PDCCH carrying the paging indication carries second paging indication information, and the second paging indication information is used to indicate a UE subgroup that needs to monitor the PDCCH or a UE subgroup that needs to be woken up. This embodiment of the present application does not limit the implementation in which the second paging indication information indicates a UE subgroup that needs to monitor the PDCCH or a UE subgroup that needs to be woken up. For example, the second paging information may include an identifier of the UE subgroup that needs to be woken up or an identifier of the UE subgroup that needs to monitor the paging PDCCH.

Based on this, in a possible implementation, the method for determining a reference signal provided in this embodiment of the present application further includes:
obtaining a second paging indication information in the paging indication PDCCH or a second paging indication information in the PDCCH carrying the paging indication; and determining whether the reference signal is valid according to the second paging indication information.

This embodiment of the present application does not limit the specific implementation of determining whether the reference signal is valid according to the second paging indication information. In a p os sible implementation, determining whether the reference signal is valid according to the second paging indication information includes: if the second paging indication information is used to indicate that the UE subgroup needs to monitor the paging PDCCH, or is used to indicate that the UE subgroup belongs needs to be woken up, where the target UE belongs to the UE subgroup, determining the reference signal is valid, the reference signal is after obtaining the second paging indication information.

In another possible implementation, determining whether the reference signal is valid according to the second paging indication information includes: if the second paging indication information indicates that the UE subgroup to which the target UE belongs does not need to monitor the paging PDCCH, or indicates that the UE subgroup to which the target UE belongs does not need to be woken up, the reference signal is determined to be invalid. In another possible implementation, determining whether the reference signal is valid according to the second paging indication information includes: if the second paging indication information does not indicate that the UE subgroup to which the target UE belongs needs to monitor the paging PDCCH, or does not indicate that the UE subgroup to which the target UE belongs needs to be woken up, determining that the reference signal is invalid.

In the embodiment of the present application, it is determined that whether the reference signal is valid by the paging indication information in the paging indication PDCCH, so as to avoid the introduction of a new channel, and by further grouping the UE, the number of times the UE measures the reference signal is reduced, and energy consumption is saved.

In a possible implementation, determining that the reference signal is valid, where the reference signal is after the paging indication PDCCH or the PDCCH carrying the paging indication, includes:
determining that the reference signal in a fourth preset time is valid, where the fourth preset time is after the paging indication PDCCH, or, determining the reference signal in a fourth preset time is valid, where the fourth preset time is after the PDCCH carrying the paging indication.

In a possible implementation, determining that the reference signal is valid, the reference signal is after obtaining the second paging indication information includes: determining that the reference signal in a fifth preset time is valid, where the fifth preset time is after obtaining the second paging indication information.

This embodiment of the present application does not limit the specific time length of the fourth preset time or the fifth preset time, and the fourth preset time or the fifth preset time may be a preset value, such as 1 millisecond, 2 milliseconds, 1 slot, 2 slots, etc. The embodiment of the present application does not limit the specific implementation of obtaining the fourth preset time or the fifth preset time. For example, the configuration of the fourth preset time or the fifth preset time may be obtained through higher layer parameter configuration. By defining a valid time range of the reference signal, it is possible for the base station to transmit the reference signal only within the valid time range, thus the overhead of the system or the network is reduced.

In a possible implementation, determining that the reference signal is valid, where the reference signal is after the paging indication PDCCH or is after the PDCCH carrying the paging indication, includes:
determining that the reference signal within a, or, determining that the reference signal in a fourth preset time window after the PDCCH carrying the paging indication is valid, or, determining that the reference signal in the fifth preset time window after the second paging indication information is valid.

The fourth preset time window or the fifth preset time window may include a start point and a duration (or an end point). This embodiment of the present application does not limit the specific implementation of obtaining the fourth preset time window or the fifth preset time window. For example, the configuration of the fourth preset time window or the fifth preset time window can be obtained through higher layer parameter configuration. The use of a time window can increase flexibility.

In a possible implementation, determining that the reference signal is valid, where the reference signal is after the paging indication PDCCH or is after the PDCCH carrying the paging indication, includes:
determining that a third type of timer is started after obtaining the first paging indication information, where the reference signal is valid before the third type of timer expires.

It is determined that a fourth type of timer is started after the paging indication PDCCH, and the reference signal is valid before the fourth type of timer expires, or it is determined that the fourth type of timer is started after the PDCCH carrying the paging indication, and the reference signal is valid before the fifth type of timer expires, or it is determined that a fifth type of timer is started after obtaining the second paging indication information, and the reference signal is valid before the fifth type of timer expires.

The fourth type of timer or the fifth type of timer may include a starting point and a duration. This embodiment of the present application does not limit the specific implementation of obtaining the fourth type of timer or the fifth type of timer. For example, the configuration of the fourth type of timer or the fifth type of timer may be obtained through higher layer parameter configuration. The use of a timer can simplify complexity.

### Embodiment 6

For the application scenario of the UE where the reference signal includes the TRS, the UE may not use the synchronization signal block, but use the reference signal for AGC adjustment, time-frequency synchronization and measurement. The UE uses TRS for AGC adjustment and time-frequency synchronization, and uses CSI-RS for mobility for measurement. For example, sometimes the TRS is closer to a PO than the synchronization signal block, therefore, the UE can use the TRS to perform AGC adjustment and time-frequency synchronization before the PO. For another example, an idle state of the UE resides in a bandwidth, and the bandwidth does not contain synchronization signal blocks, therefore, the UE can only use TRS for AGC adjustment and time-frequency synchronization.

Based on this, in a possible implementation, FIG. 9 is a flowchart of a method for determining a reference signal provided by another embodiment of the present application. The method may be executed by the apparatus for determining a reference signal and the apparatus may use software and/or or hardware implementation. For example, the apparatus may be part or all of the above mentioned user equipment, and the following describes the method for determining a reference signal with the user equipment as the executive entity. As shown in FIG. 9, step S102 in the embodiment of the present application can include the following.

Step S601: if a TRS is detected, determine that the reference signal is valid, where the reference signal is after the TRS.

TRS can be used not only for time-frequency synchronization, but also for indicating whether the reference signal is valid. For example, a TRS, has 4 NZP CSI-RS resources, occupies 4 orthogonal frequency division multiplexing (Orthogonal Frequency-Division Multiplexing, OFDM) symbols. The UE can blindly detect the TRS to determine whether the reference signal is valid. If the TRS is detected, the reference signal is determined to be valid, and the reference signal is further measured, where the reference signal may be CSI-RS for mobility. It is worth noted that the TRS is also a downlink signal. Herein, the TRS is detected by the UE is equivalent to that the UE detects the TRS and the detection result is that the TRS is detected, or equivalent to that the TRS is detected by the UE successfully.

In a possible implementation, if the TRS is detected, the UE determines that it needs to monitor the paging PDCCH after the TRS. Additionally, if the TRS is detected, the UE determines that it needs to monitor the paging PDCCH in the first PO or PF after the TRS.

In a possible implementation, a quasi co-location (QCL) relationship exists between the TRS and the synchronization signal block, and a QCL relationship or an association relationship or a time reference relationship exists between the synchronization signal block and the reference signal.

In general, having a Quasi Co-location (QCL) relationship means that two signals (which can be a synchronization signal block or a reference signal or a reference signal resource or a set of reference signal resources) have some of the same large-scale properties, so that one signal can be used as reference for the other signal for channel estimation. The quasi co-location type A and the quasi co-location typeD are two types of quasi co-location types. Generally speaking, having a relationship of a quasi co-location type A means that the two signals have the same average delay (average delay), delay spread (delay spread), Doppler shift (Doppler shift) and Doppler spread (Doppler spread); while having a relationship of a quasi co-location typeD indicates that two signals have the same spatial receive parameter (Sp atial Rx parameter). In this embodiment of the present application, a QCL relationship exists between the TRS and the synchronization signal block may include: the same average gain (average gain), a QCL Type A relationship, and/or a QCL Type D relationship exists between the TRS and the synchronization signal block.

The TRS may have a QCL relationship with the synchronization signal block, that is, the TRS and the synchronization signal block are transmitted using the same beam. And the QCL relationship between the TRS and the synchronization signal block can be indicated by existing signaling.

The synchronization signal block may have a QCL relationship or an association (association) relationship or a timing reference (timing reference) relationship with the reference signal. If the UE detects the TRS, it is determined that the reference signal is valid.

In the embodiment of the present application, by detecting the TRS and determining that the reference signal is valid, where the reference signal is after the TRS, not only the determination of whether the reference signal is valid is realized, but also the TRS can be used for time-frequency synchronization without introducing additional signaling thus the system overhead is saved.

In a possible implementation, determining that the reference signal is valid, where the reference signal is after the TRS, includes:
determining that the reference signal in a sixth preset time, which is after the TRS, is valid.

This embodiment of the present application does not limit the specific time length of the sixth preset time, and the sixth preset time may be a preset value, for example, 1 millisecond, 2 milliseconds, 1 time slot, 2 time slots, and so on. The embodiment of the present application does not limit the specific implementation of obtaining the sixth preset time. For example, the sixth preset time configuration may be obtained through higher layer parameter configuration. By defining a valid time range for the reference signal, it is possible for the base station to transmit the reference signal only within the valid time range, thus the overhead of the system or the network is reduced.

In a possible implementation, determining that the reference signal is valid, where the reference signal is after the TRS, includes: determining that the reference signal in a sixth preset time window after the TRS is valid. Where the sixth preset time window may include a start point and a duration (or an end point). This embodiment of the present application does not limit the specific implementation of obtaining the sixth preset time window. For example, the configuration of the sixth preset time window may be obtained through higher layer parameter configuration. The use of a time window can increase flexibility.

In a possible implementation, determining that the reference signal is valid, where the reference signal is after the TRS, includes: determining that a sixth type of timer starts after the TRS, and the reference signal is valid before the sixth type of timer expires. Where the sixth type of timer may include a starting point and a duration. The embodiment of the present application does not limit the specific implementation of obtaining the sixth type of timer. For example, the configuration of the sixth type of timer may be obtained through higher layer parameter configuration. The use of a timer can simplify complexity.

In a possible implementation, the UE may detect the TRS before a PO or a paging frame (Paging Frame, PF). Further, the UE may detect the TRS from a preset offset before the start time of the PO, or the UE may detect the TRS from a preset offset before the start time of the PF.

The methods in the foregoing embodiments and other embodiments of the present application may be used alone or in combination, which are not limited in the embodiments of the present application.

The following are the apparatus embodiments of the present application, which can be used to execute the method embodiments of the present application. For details not disclosed in the apparatus embodiments of the present application, please refer to the method embodiments of the present application.

FIG. 10 is a schematic structural diagram of an apparatus for determining a reference signal provided by an embodiment of the present application. The apparatus may be implemented in software and/or hardware. As shown in FIG. 10, the apparatus for determining a reference signal provided by an embodiment of the present application may include:
a detection module 81, configured to detect a downlink signal or monitor a physical downlink control channel (PDCCH) to obtain a first result, where the first result is a detection result or a monitoring result; and
a determining module 82, configured to determine whether the reference signal is valid according to the first result.

In a possible implementation, the PDCCH includes the paging PDCCH, and the determining module 82 is configured to:
if the paging PDCCH is monitored, determine that the reference signal is valid, where the reference signal is after the paging PDCCH.

Optionally, the determining module 82 is configured to:
determine that the reference signal in a first preset time, where the first preset time is after the paging PDCCH is valid.

In a possible implementation, the PDCCH includes the paging PDCCH, and the determining module 82 is configured to:
if the paging PDCCH is monitored, obtain a paging message scheduled by the paging PDCCH; and if the paging message comprises an identifier of a target UE, determine that the reference signal is valid.

In a possible implementation, the determining module 82 is specifically configured to:
determine that the reference signal in a second preset time is valid, where the second preset time is after obtaining the paging message.

In a possible implementation, the PDCCH includes the paging PDCCH, and the determining module 82 is configured to:
if the paging PDCCH is monitored, obtain first paging indication information in the paging PDCCH; and determine whether the reference signal is valid according to the first paging indication information.

In a possible implementation, the determining module 82 is specifically configured to:
if the first paging indication information indicates that a UE subgroup needs to receive a paging message or to be woken up, determine that the reference signal is valid, where a target UE belongs to the UE subgroup and the reference signal is after obtaining the first paging indication information.

In a possible implementation, the determining module 82 is configured to:
determine that the reference signal in a third preset time is valid, where the third preset time is after obtaining the first paging indication information.

Optionally, the first paging indication information is carried in a reserved bit in the paging PDCCH.

In a possible implementation, the PDCCH includes a paging indication PDCCH or a PDCCH carrying a paging indication, and the determining module 82 is configured to:
if the paging indication PDCCH or the PDCCH carrying the paging indication is monitored, determine that the reference signal is valid, where the reference signal is after the paging indication PDCCH or is after the PDCCH carrying the paging indication.

In a possible implementation, the determining module 82 is specifically configured to:
determine that the reference signal in a fourth preset time is valid, where the fourth preset time is after the paging indication PDCCH, or, determine that the reference signal in a fourth preset time is valid, where the fourth preset time is after the PDCCH carrying the paging indication.

In a possible implementation, the determining module 82 is further configured to:
obtain second paging indication information in the paging indication PDCCH or the second paging indication information in the PDCCH carrying the paging indication; and determine whether the reference signal is valid according to the second paging indication information.

In a possible implementation, the determining module 82 is configured to:
if the second paging indication information is used for indicating that a UE subgroup needs to monitor the paging PDCCH or used for indicating that the UE subgroup needs to be woken up, determine that the reference signal is valid, where a target UE belongs to the UE subgroup and the reference signal is after obtaining the second paging indication information.

In a possible implementation, the determining module 82 is configured to:
determine that the reference signal in a fifth preset time is valid, where the fifth preset time is after obtaining the second p aging indication information.

In a possible implementation, the downlink signal includes a tracking reference signal (TRS), and the determining module 82 is configured to:
if the TRS is detected, determine that the reference signal is valid, where the reference signal is following the TRS.

In a possible implementation, the determining module 82 is configured to:
determine that the reference signal in a sixth preset time following the TRS is valid.

In a possible implementation, a quasi co-location (QCL) relationship exists between the TRS and a synchronization signal block, and a QCL relationship, an association relationship, or a time reference relationship exists between the synchronization signal block and the reference signal.

The apparatus embodiments provided in the present application are only schematic, and the module division in FIG. 10 is only a logical function division, and there may be other division manners in actual implementation. For example, multiple modules can be combined or can be integrated into another sy stem. The coupling between the modules may be through some interfaces, which are usually electrical communication interfaces, but may be mechanical interfaces or other forms of interfaces. Thus, modules described as separate components may or may not be physically separate, and may be located in one place or distributed in different locations on a same or different devices.

An embodiment of the present application provides a chip, including: a processor, where the processor is configured to call and run a computer program from a memory, so that a device installed with the chip executes the method in any of the foregoing method embodiments.

An embodiment of the present application further provides a chip module including the above-mentioned chip.

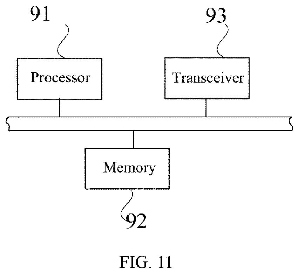

FIG. 11 is schematic structural diagram of an electronic device provided by an embodiment of the present application. As shown in FIG. 11, the electronic device includes:
a processor 91, a memory 92, a transceiver 93, and a computer program. Where the transceiver 93 implements data transmission with other devices, the computerprogram is stored in the memory 92 and is configured to be executed by the processor 91, and the computer program includes an instruction for executing the above method for determining a reference signal. Please refer to the method embodiments for the content and the effect.

In addition, an embodiment of the present application further provides a computer-readable storage medium, where computer-executable instructions are stored in the computer-readable storage medium, and when at least one processor of user equipment executes the computer-executable instructions, the user equipment executes the above-mentioned various possible methods.

An embodiment of the present application further provides a computer program product, including a computer program which, when executed by a processor, implements the method in any of the foregoing method embodiments.

The computer-readable media include both computer storage media and communication media including any medium that facilitates transfer of a computer program from one place to another. A storage medium can be any available medium that can be accessed by a general or special computer. An exemplary storage medium is coupled to the processor, such that the process or can read information from and write information to the storage medium. Of course, the storage medium can also be an integral part of the processor. The processor and storage medium may be in an ASIC. Alternatively, the ASIC may be located in the user equipment. Of course, the processor and storage medium may also exist in the communication device as discrete components.

Those of ordinary skill in the art can understand that all or part of the steps of implementing the above method embodiments may be completed by hardware related to program instructions. The aforementioned program can be stored in a computer-readable storage medium. When the program is executed, the steps including the above method embodiments are executed. The foregoing storage medium includes: a ROM, a RAM, a magnetic disk or an optical disk and other media that can store program codes.

Finally, it should be noted that the above embodiments are only used to illustrate the technical solutions of the present application, but not to limit them. Although the present application has been described in detail with reference to the foregoing embodiments, those of ordinary skill in the art should understand that: the technical solutions described in the foregoing embodiments can still be modified; or some or all of the technical features thereof can be equivalently replaced, and these modifications or replacements do not make the essence of the corresponding technical solutions deviate from the range of the technical solutions of the embodiments of the present application.

## Claims

1. A method for determining a reference signal, comprising:
detecting a downlink signal or monitoring a physical downlink control channel (PDCCH) to obtain a first result, wherein the first result is a detection result or a monitoring result; and
determining whether the reference signal is valid according to the first result.

2. The method according to claim 1, wherein the PDCCH comprises a paging PDCCH, and the determining whether the reference signal is valid according to the first result comprises:
if the paging PDCCH is monitored, determining that the reference signal is valid, wherein the reference signal is after the paging PDCCH.

3. The method according to claim 2, wherein the determining that the reference signal is valid, wherein the reference signal is after the paging PDCCH, comprises:
determining that the reference signal in a first preset time is valid, wherein the first preset time is after the paging PDCCH.

4. The method according to claim 1, wherein the PDCCH comprises a paging PDCCH, the determining whether the reference signal is valid according to the first result comprises:
if the paging PDCCH is monitored, obtaining a paging message scheduled by the paging PDCCH; and
if the paging message comprises an identifier of a target UE, determining that the reference signal is valid.

5. The method according to claim 4, wherein the determining that the reference signal is valid comprises:
determining that the reference signal in a second preset time is valid, wherein the second preset time is after obtaining the paging message.

6. The method according to claim 1, wherein the PDCCH comprises a paging PDCCH, and the determining whether the reference signal is valid according to the first result comprises:
if the paging PDCCH is monitored, obtaining first paging indication information in the paging PDCCH; and
determining whether the reference signal is valid according to the first paging indication information.

7. The method according to claim 6, wherein the determining whether the reference signal is valid according to the first paging indication information comprises:
if the first paging indication information indicates that a UE subgroup needs to receive a paging message or to be woken up, determining that the reference signal is valid, wherein a target UE belongs to the UE subgroup and the reference signal is after obtaining the first paging indication information.

8. The method according to claim 7, wherein the determining that the reference signal is valid, wherein the reference signal is after obtaining the first paging indication information comprises:
determining that the reference signal in a third preset time is valid, wherein the third preset time is after obtaining the first paging indication information.

9. The method according to claim 6, wherein the first paging indication information is carried in a reserved bit of the paging PDCCH.

10. The method according to claim 1, wherein the PDCCH comprises a paging indication PDCCH or a PDCCH carrying a paging indication, and the determining whether the reference signal is valid according to the first result comprises:
if thep aging indication PDCCH or thePDCCH carrying the p aging indication is monitored, determining that the reference signal is valid,
wherein the reference signal is after the paging indication PDCCH or is after the PDCCH carrying the paging indication.

11. The method according to claim 10, wherein the determining that the reference signal is valid, wherein the reference signal is after the paging indication PDCCH or is after the PDCCH carrying the paging indication comprises:
determining that the reference signal in a fourth preset time is valid, wherein the fourth preset time is after the paging indication PDCCH, or, determining that the reference signal in a fourth preset time is valid, wherein the fourth preset time is after the PDCCH carrying the paging indication.

12. The method according to claim 10, further comprising:
obtaining second paging indication information in the paging indication PDCCH or obtaining the second paging indication information in the PDCCH carrying the paging indication; and
determining whether the reference signal is valid according to the second paging indication information.

13. The method according to claim 12, wherein the determining whether the reference signal is valid according to the second paging indication information comprises:
if the second paging indication information is used for indicating that a UE subgroup needs to monitor the paging PDCCH or used for indicating that the UE subgroup needs to be woken up, determining that the reference signal is valid,
wherein a target UE belongs to the UE subgroup and the reference signal is after obtaining the paging indication information.

14. The method according to claim 13, wherein the determining that the reference signal is valid, wherein the reference signal is after obtaining the second paging indication information, comprises:
determining that the reference signal in a fifth preset time is valid, wherein the fifth preset time is after obtaining the second paging indication information.

15. The method according to claim 1, wherein the downlink signal comprises a tracking reference signal (TRS), and the determining whether the reference signal is valid according to the first result comprises:
if the TRS is detected, determining that the reference signal is valid, wherein the reference signal is following the TRS.

16. The method according to claim 15, wherein the determining that the reference signal is valid, wherein the reference signal is following the TRS, comprises:
determining that the reference signal in a sixth preset time is valid, wherein the sixth preset time is following the TRS.

17. The method according to claim 15, wherein a quasi co-location (QCL) relationship exists between the TRS and a synchronization signal block, and a QCL relationship, an association relationship, or a time reference relationship exists between the synchronization signal block and the reference signal.

18. The method according to any one of claims 1-17, wherein the reference signal is a channel state information reference signal (CSI-RS).

19. An apparatus for determining a reference signal, comprising:
a detecting module, configured to detect a downlink signal or monitor a physical downlink control channel (PDCCH) to obtain a first result, wherein the first result is a detection result or a monitoring result; and
a determining module, configured to determine whether the reference signal is valid according to the first result.

20. The apparatus according to claim 19, wherein the PDCCH comprises a p aging PDCCH, the determining module is configured to:
if the paging PDCCH is monitored, determine that the reference signal is valid, wherein the reference signal is after the paging PDCCH.

21. The apparatus according to claim 20, wherein the determining module is specifically configured to:
determine that the reference signal in a first preset time is valid, where the first preset time is after the paging PDCCH is valid.

22. The apparatus according to claim 19, wherein the PDCCH comprises a paging PDCCH, and the determining module is configured to:
if the paging PDCCH is monitored, obtain a paging message scheduled by the paging PDCCH; and
if the paging message comprises an identity of a target UE, determine that the reference signal is valid.

23. The apparatus according to claim 22, wherein the determining module is specifically configured to:
determine that the reference signal in a second preset time is valid, wherein the second preset time is after obtaining the paging message.

24. The apparatus according to claim 19, wherein the PDCCH comprises a paging PDCCH, and the determining module is configured to:
if the paging PDCCH is monitored, obtain first paging indication information in the paging PDCCH; and
determine whether the reference signal is valid according to the first paging indication information.

25. The apparatus according to claim 24, wherein the determining module is specifically configured to:
if the first paging indication information indicates that a UE subgroup needs to receive a paging message or to be woken up, determine that the reference signal is valid, wherein a target UE belongs to the UE subgroup and the reference signal is after obtaining the first paging indication information.

26. The apparatus according to claim 25, wherein the determining module is configured to:
determine that the reference signal in a third preset time is valid, wherein the third preset time is after obtaining the first paging indication information.

27. The apparatus according to claim 24, wherein the first paging indication information is carried in a reserved bit in the paging PDCCH.

28. The apparatus according to claim 19, wherein the PDCCH comprises a paging indication PDCCH or a PDCCH carrying a paging indication, and the determining module is configured to:
if thep aging indication PDCCH or the PDCCH carrying the p aging indication is monitored, determine that the reference signal is valid, wherein the reference signal is after the paging indication PDCCH or is after the PDCCH carrying the paging indication.

29. The apparatus according to claim 28, wherein the determining module is specially configured to:
determine that the reference signal in a fourth preset time is valid, wherein the fourth preset time is after the paging indication PDCCH, or, determine that the reference signal in a fourth preset time is valid, wherein the fourth preset time is after the PDCCH carrying the paging indication.

30. The apparatus according to claim 28, wherein the determining module is further configured to:
obtain second paging indication information in the paging indication PDCCH or the second paging indication information in the PDCCH carrying the paging indication; and
determine whether the reference signal is valid according to the second paging indication information.

31. The apparatus according to claim 30, wherein the determining module is configured to:
if the second paging indication information is used for indicating that a UE subgroup needs to monitor the paging PDCCH or used for indicating that the UE subgroup needs to be woken up, determine that the reference signal is valid, wherein a target UE belongs to the UE subgroup and the reference signal is after obtaining the second paging indication information.

32. The apparatus according to claim 31, wherein the determining module is configured to:
determine that the reference signal in a fifth preset time is valid, wherein the fifth preset time is after obtaining the second paging indication information.

33. The apparatus according to claim 19, wherein the downlink signal comprises a tracking reference signal (TRS), and the determining module is configured to:
if the TRS is detected, determine that the reference signal is valid, wherein the reference signal is following the TRS.

34. The apparatus according to claim 33, wherein the determining module is configured to:
determine that the reference signal in a sixth preset time following the TRS is valid.

35. The apparatus according to claim 33, wherein a quasi co-location (QCL) relationship exists between the TRS and a synchronization signal block, and a QCL relationship, an association relationship, or a time reference relationship exists between the synchronization signal block and the reference signal.

36. The apparatus according to any one of claims 19-35, wherein the reference signal is a channel state information reference signal (CSI-RS).

37. A chip, comprising: a processor, configured to call and run a computer program from a memory, so that a device with the chip installed executes the method of any one of claims 1-18.

38. A chip module, comprising the chip of claim 37.

39. An electronic device, comprising:
at least one processor; and
a memory connected with the at least one processor in a communication way; wherein
the memory stores instructions executable by the at least one processor, the instructions being executed by the at least one processorto enable the at least one processorto perform the method of any one of claims 1-18.

40. A non-transitory computer readable storage medium storing computer instructions, wherein the computer instructions are used to cause the computer to perform the method of any one of claims 1-18.

41. A computer program product, comprising a computer program which, when executed by a processor, implements the method of any one of claims 1-18.
